# FASCICULE DE BREVET EUROPEEN

(11) **EP 1 899 753 B1**
(45) Date de publication et mention de la délivrance du brevet: **19.05.2010**
(21) Numéro de dépôt: 06777571.8
(22) Date de dépôt: 04.07.2006
(51) Int. Cl.: G02B 6/00, H02M 3/156, H01R 13/641, F21V 9/10

(54) **APPAREIL DE PRODUCTION D'UN SIGNAL ELECTRIQUE DOTE D'UN MOYEN LUMINEUX CARACTERISANT LEDIT SIGNAL**
VORRICHTUNG ZUM PRODUZIEREN EINES ELEKTRISCHEN SIGNALS MIT LEUCHTMITTELN ZUM CHARAKTERISIEREN DES SIGNALS
APPARATUS FOR PRODUCING AN ELECTRIC SIGNAL PROVIDED WITH LUMINOUS MEANS CHARACTERIZING SAID SIGNAL

(30) Priorité: 06.07.2005 FR 0552070
(43) Date de publication de la demande: 19.03.2008
(73) Titulaire: Thomson Licensing, 92443 Issy-les-Moulineaux Cedex (FR)
(72) Inventeur: RENARD, Francis, F-49124 Saint-Bartélémy d'Anjou (FR)
(74) Mandataire: Le Dantec, Claude
(86) Numéro de dépôt international: PCT/EP2006/063878
(87) Numéro de publication internationale: WO 2007/003647

(56) Documents cités:
- US-A- 5 588 873
- US-A- 5 708 551
- US-A- 5 739 673
- US-A- 6 113 281
- US-A1- 2003 042 881
- US-A1- 2004 001 526
- US-A1- 2004 242 087

## Description

La présente invention concerne un appareil de production d'un signal électrique doté d'un moyen lumineux caractérisant ledit signal et un système composé de l'appareil de production et d'un autre appareil connectable au premier.

Certains appareils électriques, de préférence portables, disposent d'une alimentation autonome telle que des piles ou des batteries. Mais les piles ou les batteries sont coûteuses et lorsqu'elles sont hors d'usage, l'appareil est inutilisable. Heureusement, dans la plupart des cas, les constructeurs ont prévu un connecteur permettant de recevoir une énergie identique à celle fournie par l'alimentation autonome, à la fois en terme de courant qu'en terme de tension. Cette énergie est fournie par un adaptateur qui se branche sur une prise de courant et fournit une tension continue. Un adaptateur est généralement constitué d'un transformateur produisant une tension alternative de quelques volts à une dizaine de volts, un élément redresseur et un régulateur de tension. Un câble transmet l'énergie à une fiche qui se connecte à l'appareil. Devant la multiplicité des appareils disposant d'une alimentation autonome mais de caractéristiques différentes, les constructeurs ont conçus un adaptateur adaptable permettant de fournir l'énergie en fonction de l'appareil.

Il est connu des adaptateurs disposant d'un sélecteur permettant de commander le régulateur pour qu'il produise des tensions différentes. Typiquement, ces tensions correspondent à des multiples de 1.5 volts qui est la tension d'une pile standard, on trouve donc 3 volts, 4.5 volts, 6 volts, 7.5 volts, 9 volts, ... Avant de brancher son adaptateur, l'utilisateur doit le régler pour qu'il fournisse une tension adaptée. Devant la multiplicité des appareils, l'utilisateur ne connaît pas toujours les caractéristiques de l'alimentation et doit donc se référer à la notice. Au pire, si l'adaptateur mal réglé émet une tension au dessus de celle de l'alimentation de l'appareil, cela peut provoquer la destruction de l'appareil et/ou de l'adaptateur.

Le document US 2003/042 881 décrit un générateur de tension pour recharger un téléphone portatif. L'utilisateur sélectionne la tension spécifiée pour le téléphone à l'aide d'un sélecteur situé au niveau du module de génération de tension. Une indication de couleur dépendante de la tension est placée sur le téléphone. Le sélecteur possède des repères colorés, de cette façon l'utilisateur peut vérifier que la tension du générateur correspond à la tension à fournir au téléphone. Si le générateur de tension est séparé du support du téléphone, l'utilisateur ne peut facilement faire ce contrôle.

Le document US 6 113 281 décrit un câble optique pour transmettre un faisceau lumineux. Le câble reçoit de la lumière à une extrémité et la transmet à l'autre extrémité. A l'aide d'une bague de couleur rotative, l'utilisateur peut modifier la couleur de la lumière transmise par le câble. Ce document n'apporte aucun enseignement sur la façon de repérer facilement une valeur de tension fournie par un générateur programmable.

Le document US 5 708 551 décrit un générateur de tension pour alimenter un appareil extérieur. Une diode LED émet une lumière lorsque le générateur détecte un défaut de connexion. Ce document n'apporte aucun enseignement sur la façon de repérer facilement une valeur de tension fournie par un générateur programmable.

Il existe donc un réel besoin de disposer d'un générateur de tension programmable que l'on peut disposer n'importe où, et qui peut fournir une indication de la tension ainsi générée facilement repérable par l'utilisateur.

Un objet de la présente invention est un appareil de production d'un signal électrique disposant d'un moyen de production dudit signal électrique, d'un moyen de réglage d'une caractéristique dudit signal, d'un câble transmettant le signal à un élément de connexion chargé de fournir ledit signal à un autre appareil,
caractérisé en ce que le câble transmet également un signal lumineux dont une caractéristique visible dépend de la valeur de la caractéristique réglable du signal électrique produit, l'élément de connexion comportant un moyen d'émission dudit signal lumineux.

De cette façon, l'utilisateur qui tient l'élément de connexion voit le signal lumineux, en déduit le réglage effectué sur l'appareil et vérifie si ce réglage est bien compatible avec le signal électrique que l'appareil à connecter peut recevoir.

Selon un premier perfectionnement, l'appareil comporte une source de lumière blanche produisant un signal lumineux qui est modulé en passant à travers des filtres de couleur mécaniquement solidaire d'une partie mobile du moyen de réglage. De cette manière, le signal lumineux fourni par la lumière blanche est coloré en fonction de la position du moyen de réglage.

Selon un autre perfectionnement, le signal électrique produit alimente le moyen d'émission du signal lumineux. Ainsi, l'absence du signal lumineux informe l'utilisateur que l'appareil ne fonctionne pas. Selon une variante, l'appareil comporte une source de lumière à la source du signal lumineux transmis au moyen d'émission. Cette source de lumière est alimentée par un second signal électrique dont une caractéristique varie en fonction du moyen de réglage. De cette façon, on n'a plus besoin de colorer la lumière blanche, elle est colorée directement à la source.

Selon un autre perfectionnement, l'appareil comporte un moyen de détection d'un défaut dans la production du signal électrique. Ce moyen affecte de façon visible l'émission du signal lumineux en cas de détection d'un tel défaut. De cette façon, l'utilisateur peut voir à la fois le réglage effectué et une indication sur le fait que l'appareil fonctionne correctement ou non.

Selon un autre perfectionnement, le moyen d'émission du signal lumineux est placé sur l'élément de connexion de telle sorte qu'il reste visible lorsque ledit élément de connexion est connecté à l'appareil pour lui fournir ledit signal électrique. Ainsi, l'utilisateur voit en fonctionnement si l'appareil fonctionne correctement.

Selon un autre perfectionnement, l'élément de connexion est amovible. L'appareil dispose d'un jeu de plusieurs éléments de connexion différents. De cette façon, l'utilisateur peut choisir un connecteur adapté à l'appareil à connecter. Selon un perfectionnement, l'appareil est destiné à être branché dans une prise de courant. De cette façon, il peut servir à fournir une tension continue à un appareil pouvant également fonctionner de façon autonome. Selon un perfectionnement, l'appareil est destiné à être branché dans une prise embarquée dans un véhicule.

Un autre objet de la présente invention concerne système composé d'un appareil de production d'un signal électrique disposant d'un moyen de production dudit signal électrique, d'un moyen de réglage d'une caractéristique dudit signal, et d'un câble transmettant le signal à un premier élément de connexion et d'un autre appareil comportant un autre élément de connexion apte à se connecter au premier élément de connexion ; caractérisé en ce que ce second appareil comporte une indication visuelle, de préférence proche dudit autre élément de connexion, informant du type de signal à produire pour que le second appareil fonctionne normalement, le câble transmettant un signal lumineux dont une caractéristique visible dépend de la valeur de la caractéristique réglable du signal électrique produit, le premier élément de connexion comportant un moyen d'émission dudit signal lumineux.

L'invention sera mieux comprise et illustrée au moyen des exemples suivants de réalisation et de mise en oeuvre, nullement limitatifs, en référence aux figures annexées sur lesquelles :
la Figure 1 est un schéma de principe d'adaptateur conformément à un exemple de réalisation de l'invention ;
la Figure 2 représente un schéma explicatif des différents constituants d'un adaptateur selon un mode de réalisation de l'invention ;
la Figure 3 est une représentation du commutateur selon un mode de réalisation de l'invention ;
La figure 4 illustre en coupe le câble de l'adaptateur.
La figure 5 montre un système composé de l'adaptateur et d'un appareil apte à recevoir le signal électrique produit par ledit adaptateur.

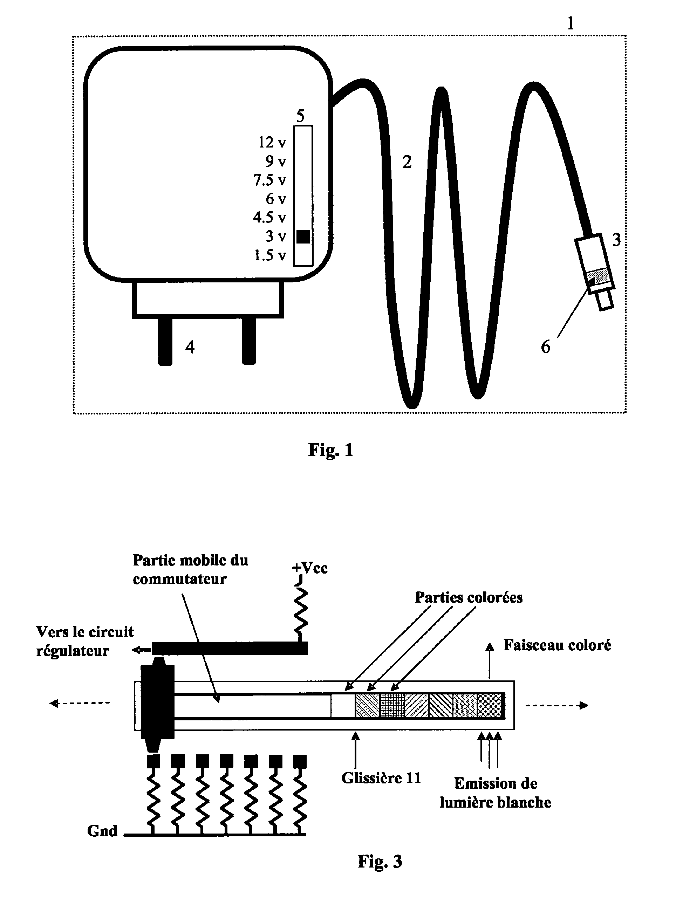

La figure 1 présente un schéma de principe d'adaptateur conformément à un exemple de réalisation de l'invention. L'adaptateur 1 comporte un boîtier, un cordon 2, et un connecteur 3 au bout du cordon. Le boîtier contient une fiche 4 pour se brancher sur une prise du secteur, un transformateur, un élément redresseur, un circuit régulateur - ces trois éléments non représentés sur la figure sont à l'intérieur du boîtier - et un commutateur 5 permettant de sélectionner la tension de sortie. Le commutateur est le type linéaire, c'est-à-dire que son réglage comporte un élément mobile dans une gorge linéaire. Il est évident que tout commutateur autre, par exemple circulaire peut convenir à la présente invention. Sur le dessin, le commutateur 5 comporte sept positions pour sélectionner une des sept tensions suivantes : 1.5 volts, 3 volts, 4.5 volts, 6 volts, 7.5 volts, 9 volts et 12 volts. Une fois branché sur une prise de courant, l'adaptateur délivre sur le connecteur 3 la tension sélectionnée sur le commutateur 5.

Selon un élément important de l'invention, il apparaît sur le connecteur 3 un élément émettant un signal lumineux identifiant la tension appliquée. Selon un premier mode de réalisation, cet élément est une bague translucide 6 disposée dans l'épaisseur du connecteur et dont la couleur identifie la tension appliquée. Le tableau ci-dessous dresse la correspondance entre la couleur et la tension :

| | |
|---|---|
| 12 volts | Rouge |
| 9 volts | Orange |
| 7.5 volts | Jaune |
| 6 volts | Vert |
| 4.5 volts | Bleu |
| 3 volts | Violet |
| 1.5 volts | Blanc |

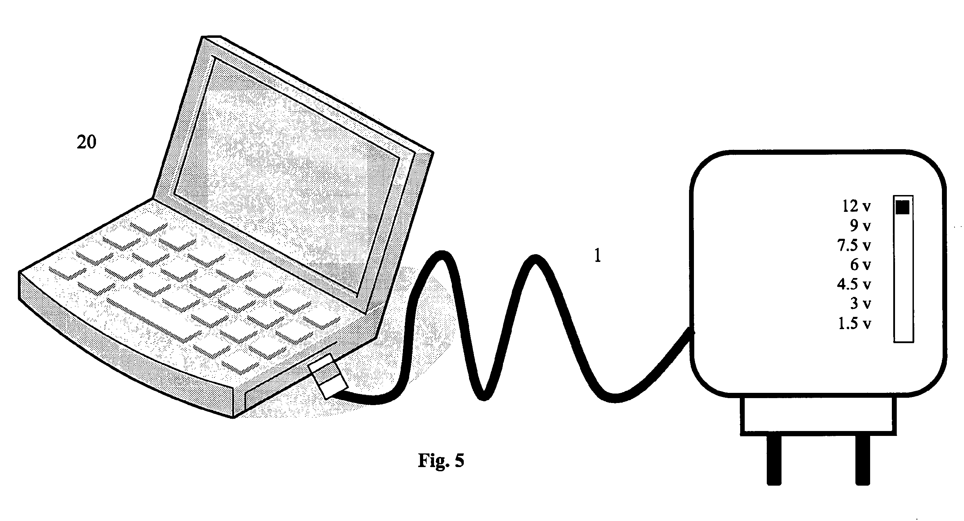

La bague de couleur fournit une indication visuelle pour l'utilisateur de la valeur de tension appliquée au bout du connecteur. L'invention est particulièrement utile lorsque le boîtier est branché sur une prise non visible et de ce fait, l'utilisateur ne voit pas le réglage qui est actuellement appliqué. L'invention possède un autre avantage : l'utilisateur voit qu'une lumière apparaît sur le connecteur 3 et en déduit que l'adaptateur est branché. Comme le montre la figure 5, l'invention concerne également un système composé de l'adaptateur 1 décrit par la figure 1 et d'un autre appareil 20 comportant un élément de connexion apte à recevoir l'élément de connexion (3) de l'appareil (1). Ce second appareil présente une partie colorée, par exemple un anneau entourant le connecteur. La tension associée à la couleur de cette partie colorée est compatible à la tension d'alimentation normale de ce second appareil. Par exemple, si l'appareil à alimenter est un Walkman, comportant trois piles de 1.5 volts, il peut être correctement alimenté par l'adaptateur 1 à condition de mettre le sélecteur 5 sur 4.5 volts. Dans ce cas, la bague 6 émet une lumière bleue. Le connecteur d'alimentation du Walkman comporte une partie peinte en bleu, par exemple un anneau de couleur bleu. La figure 5 montre l'adaptateur 1 connecté à un agenda électronique portable 20 alimenté sous une tension de 12 volts.

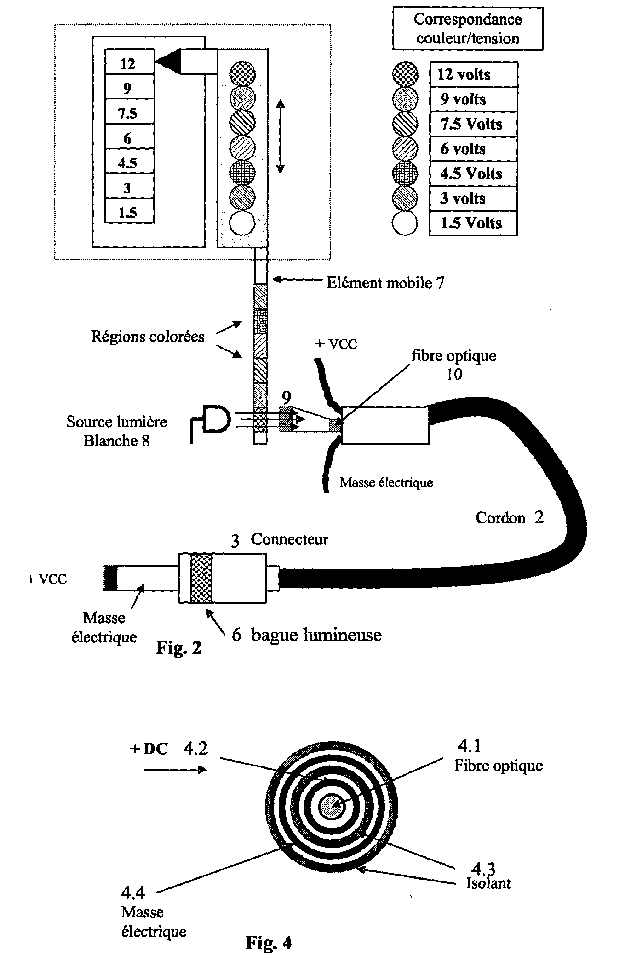

La figure 2 montre les différents constituants d'un adaptateur selon un mode de réalisation de l'invention.

Le commutateur 5 comporte un élément mobile 7 comprenant une partie électrique et une partie optique. La partie mobile coulisse entre deux guides et est manoeuvrable par l'utilisateur au moyen d'une butée. La partie électrique est connue de l'art antérieur, elle permet la sélection de la tension électrique pour le circuit régulateur. La partie optique est constituée d'une plaque de plastique translucide et colorée comportant autant de régions colorées différemment qu'il y a de tensions sélectionnables. Dans l'exemple de réalisation, la plaque de plastique comporte sept régions aux couleurs définies dans le tableau ci-dessus.

Un élément générant une lumière blanche 8, typiquement une LED, est placée devant la partie optique de l'élément mobile 7. De l'autre coté, un élément optique 9 reçoit les rayons lumineux émis par la LED blanche 8 après leur transmission à travers la partie optique. Avantageusement, cet élément optique 9 concentre les rayons lumineux pour les focaliser sur la fibre optique. Le déplacement de l'élément mobile 7 permet dans un même mouvement de sélectionner une tension et de déplacer la partie optique pour que la région colorée correspondante soit devant la LED blanche 8. L'élément optique 9 transmet ensuite le signal lumineux à une gaine translucide 10 placée dans le cordon 2. Une variante consiste à utiliser une fibre optique au sein du cordon.

La bague translucide 6 du connecteur 3 de forme cylindrique est optiquement reliée à la gaine translucide 10.

La figure 3 montre de façon détaillée l'élément mobile du commutateur. La partie électrique comporte deux électrodes, l'une relié à un contact à glissière 11 électriquement relié par une résistance de Pull Up à une tension positive +Vcc, l'autre à des plots 12, chacun des plots est relié par une résistance de Pull Down à la masse du circuit. La mise en série des résistances de Pull Up et de Pull Down réalise un pont diviseur de tension fournissant une tension de commande pour le circuit régulateur. Selon l'exemple de réalisation les parties électriques et optiques de l'élément mobile sont mises bout à bout. D'autres dispositions sont possibles, par exemple en les disposant côte à cote.

En variante, c'est la source lumineuse 8 qui change de couleur, par exemple une LED tricolore fournit une lumière soit rouge, soit jaune, soit orange. Pour un adaptateur disposant de trois positions de sélection, l'utilisation d'une telle LED permet de s'affranchir de la partie optique de l'élément mobile 7. Cette variante nécessite toutefois une commande plus sophistiquée au niveau de la LED. Une troisième variante consiste en ce que la source lumineuse soit composée de plusieurs lampes émettant leurs flux lumineux vers l'élément d'optique 9, ces lampes sont typiquement une LED rouge, une LED verte, une LED orange. Comme pour la seconde variante, la commande des lampes s'effectue en fonction de la position du commutateur. Soit une seule lampe est allumée, sa couleur correspond à celle identifiant la tension. Soit deux lampes sont allumées produisant une couleur intermédiaire.

La figure 4 illustre en coupe le câble 2 de l'adaptateur selon un exemple préféré de réalisation. Le câble est cylindrique et formé des couches concentriques suivantes, en commençant par le centre
- une fibre optique 4.1 véhiculant le signal lumineux émis par la source de lumière blanche et modulée en couleur par les régions colorées,
- une gaine électrique 4.2 transmettant le signal électrique positif de la tension d'alimentation fournie,
- une couche isolante 4.3, en PVC par exemple,
- une gaine électrique 4.4 transmettant la masse du signal électrique,
- une autre couche isolante 4.3 pour réaliser la couche externe du cordon.

Cette façon de disposer les différentes couches permet à la fois une excellente tenue mécanique et une bonne immunité au bruit électromagnétique. Les deux gaines conductrices sortent du cordon sous la forme d'un toron au niveau de l'élément d'optique 9 et sont ensuite soudés sur le circuit supportant le circuit de régulation. Les deux gaines conductrices sont fendues au niveau du connecteur 3 pour être traversées par la fibre optique afin de la relier à la bague 6. Cette façon de faire n'exclue en rien d'autres dispositions où par exemple, l'âme du cordon transporte la masse électrique. Une autre façon de faire consiste à utiliser un cordon comportant deux fils électriques et une fibre optique.

Un perfectionnement consiste en ce que la source de lumière blanche est alimentée par la tension sélectionnée. Pour éviter de faire varier la puissance lumineuse, un générateur de courant est mis en série avec la source de lumière blanche. De cette façon, l'utilisateur peut voir en regardant le connecteur 3 si l'adaptateur fonctionne et fournit une tension.

Une variante consiste en ce que le circuit régulateur comprend un organe de détection de court-circuit au niveau de la tension de sortie +DC. Si la tension présente dans le câble et sur le connecteur 3 n'est pas celle spécifiée par le commutateur, le circuit de surveillance émet un signal électrique déterminé. Si le signal est continu, la tension est bonne, mais si le signal est périodique (avec une période d'une seconde au moins) un court-circuit ou une surconsommation est détecté. Selon un aspect particulièrement astucieux, ce signal d'alarme alimente la source de lumière blanche. De sorte que si l'utilisateur voit un clignotement au niveau du signal lumineux présent sur la bague 6 du connecteur 3 alors il en déduit la présence d'un défaut. Selon cette variante, la source de lumière blanche n'est pas alimentée par la tension +DC programmée par l'utilisateur, elle n'est pas affectée par le court-circuit.

Selon un autre perfectionnement, la bague est disposée de façon qu'elle reste visible lorsque le connecteur est enfoncé dans l'appareil à alimenter. De cette façon, l'utilisateur voit si la bague émet de la lumière et en déduit en bon ou mauvais fonctionnement de l'adaptateur.

Un perfectionnement consiste en ce que le connecteur 3 est amovible. De cette façon, l'adaptateur 1 est fourni avec un jeu de différents connecteurs 3 pour s'adapter aux diverses formes de connexion pour alimenter un appareil. Ces connecteurs 3 ont tous une bague translucide qui vient en optiquement en contact avec l'élément du cordon 2 qui transporte le signal lumineux.

Selon une variante de réalisation, l'adaptateur est conçu pour fonctionner dans un véhicule. La forme des fiches est alors adaptée pour l'introduction dans un allume-cigare. La tension de base étant de 12 volts continu, le transformateur est remplacé par un module de couplage DC DC.

Bien que l'exemple préféré de réalisation concerne un appareil fournissant un signal électrique dont la tension est réglage, l'invention concerne également tout signal électrique dont une caractéristique peut être sélectionnable par l'utilisateur, le courant ou la fréquence par exemple. Ainsi, des câbles de haut-parleurs peuvent disposer à leur bout d'un connecteur doté d'une bague de couleur indiquant si ce sont des signaux audio amplifiés ou non.

Les exemples de réalisation de l'invention présentés ci-dessus ont été choisis pour leur caractère concret. Il ne serait cependant pas possible de répertorier de manière exhaustive tous les modes de réalisation que recouvre cette invention. En particulier, toute étape ou tout moyen décrit peut-être remplacé par une étape ou un moyen équivalent sans sortir du cadre de la présente invention.

## Revendications

1. Appareil (1) de production d'un signal électrique disposant d'un moyen de production dudit signal électrique, d'un moyen de réglage (5) d'une caractéristique dudit signal, d'un cable (2) transmettant le signal à un élément de connexion (3) chargé de fournir ledit signal à un autre appareil,
**caractérisé en ce que** le cable (2) transmet également un signal lumineux dont une caractéristique visible dépend de la valeur de la caractéristique réglable du signal électrique produit, l'élément de connexion (3) comportant un moyen d'émission (6) dudit signal lumineux.

2. Appareil (1) selon la revendication 1 ; **caractérisé en ce qu'**il comporte une source de lumière blanche (8) produisant un signal lumineux qui est modulé en passant à travers des filtres de couleur mécaniquement solidaire d'une partie mobile (7) du moyen de réglage (5), le signal lumineux ainsi modulé est transmis au moyen d'émission (6).

3. Appareil (1) selon la revendication 1 ou 2 ; **caractérisé en ce que** le signal électrique produit alimente le moyen d'émission (6) du signal lumineux.

4. Appareil (1) selon la revendication 1 ; **caractérisé en ce qu'**il comporte une source de lumière fournissant le signal lumineux transmis au moyen d'émission (6), ladite source de lumière étant alimentée par un second signal électrique dont une caractéristique varie en fonction du moyen de réglage.

5. Appareil (1) selon l'une quelconque des revendications 1, 2 ou 4 ; **caractérisé en ce qu'**il comporte un moyen de détection d'un défaut dans la production du signal électrique, ledit moyen affectant de façon visible l'émission du signal lumineux en cas de détection d'un tel défaut.

6. Appareil (1) selon l'une quelconque des revendications précédentes ; **caractérisé en ce que** le moyen d'émission (6) du signal lumineux est placé sur l'élément de connexion (3) de telle sorte qu'il reste visible lorsque ledit élément de connexion est connecté à l'appareil pour lui fournir ledit signal électrique

7. Appareil (1) selon l'une quelconque des revendications précédentes ; **caractérisé en ce que** l'élément de connexion (3) est amovible, l'appareil disposant d'un jeu de plusieurs éléments de connexion (3) différents.

8. Système composé d'un appareil (1) de production d'un signal électrique disposant d'un moyen de production dudit signal électrique, d'un moyen de réglage (5) d'une caractéristique dudit signal, et d'un câble (2) transmettant le signal à un premier élément de connexion (3) et d'un autre appareil (20) comportant un autre élément de connexion apte à se connecter au premier élément de connexion (3) ; **caractérisé en ce que** ce second appareil comporte une indication visuelle, de préférence proche dudit autre élément de connexion, informant du type de signal à produire pour que le second appareil fonctionne normalement, le câble (2) transmettant un signal lumineux dont une caractéristique visible dépend de la valeur de la caractéristique réglable du signal électrique produit, le premier élément de connexion (3) comportant un moyen d'émission (6) dudit signal lumineux.

9. Système composé d'un appareil de production (1) d'un signal électrique et d'un autre appareil (20) recevant ledit signal électrique selon la revendication 8 ; **caractérisé en ce que** l'indication visuelle sur l'autre appareil (20) est constitué d'un anneau entourant le connecteur dans lequel vient se ficher l'élément de connexion (3).

## Claims

1. Device (1) to produce an electric signal having a means to produce said electric signal, an adjustment means (5) of a characteristic of said signal, a cable (2) transmitting the signal to a connection element (3) responsible for supplying said signal to another device,
**characterized in that** the cable (2) also transmits a light signal whose visible characteristic depends upon the value of the adjustable characteristics of the electric signal produced, the connection element (3) having an emission means (6) of said light signal.

2. Device (1) according to claim 1, **characterized in that** it comprises a white light source (8) producing a light signal that is modulated by passage through color filters mechanically integrated into a mobile part (7) of the adjustment means (5), the light signal thus modulated is transmitted by the transmission means (6).

3. Device (1) according to claim 1 or 2, **characterized in that** the electrical signal produced supplies the transmission means (6) of the light signal.

4. Device (1) according to claim 1, **characterized in that** it comprises a light source supplying the light signal transmitted by the transmission means (6), the said light source being supplied by a second electrical signal whose characteristics vary as a function of the adjustment means.

5. Device (1) according to any one of the claims 1, 2 or 4, **characterized in that** it comprises a means of detecting a fault in the production of an electrical signal, the said means affecting in a visible manner the emission of the light signal in the case of such a fault.

6. Device (1) according to any one of the aforementioned claims, **characterized in that** the transmission means (6) of the light signal is located on the connection element (3) in such a way that it remains visible whenever said connection element is connected to the device to supply it with said electric signal.

7. Device (1) according to any one of the aforementioned claims, **characterized in that** the connection element (3) is removable, the device has a set of several different connection elements (3).

8. System composed of a device (1) to produce an electrical signal having a means of producing said electrical signal, an adjustment means (5) of a characteristic of the said signal and a cable (2) transmitting the signal to a first connection element (3) and another device (20) comprising another connection element capable of connecting to the first connection element (3), **characterized in that** this second device comprises a visual indication, preferably close to said other connection element, providing information on the type of signal to be produced so that the second device functions normally, the cable (2) transmitting a light signal of which a visible characteristic depends upon the value of the adjustable characteristic of the electrical signal produced, the first connection element (3) comprising a transmission means (6) of said light signal.

9. System comprised of an electrical signal production device (1) and another device (20) receiving said electrical signal according to claim 8, **characterized in that** the visual indication on the other device (20) is comprised of a ring surrounding the connector into which the connection element (3) pushed.

## Patentansprüche

1. Gerät (1) zum Erzeugen eines elektrischen Signals, welches über ein Mittel zur Erzeugung des elektrischen Signals, ein Mittel (5) für die Einstellung einer Charakteristik des Signals, ein das Signal zu einem das Signal an ein anderes Gerät liefernden Verbindungselement (3) übertragendes Kabel (2) verfügt, **dadurch gekennzeichnet, dass** das Kabel (2) ebenfalls ein Lichtsignal überträgt, dessen eine sichtbare Charakteristik von dem Wert der einstellbaren Charakteristik des erzeugten elektrischen Signals abhängt, und das Verbindungselement (3) ein Mittel (6) zur Ausstrahlung des Lichtsignals aufweist.

2. Gerät (1) nach Anspruch 1, **dadurch gekennzeichnet, dass** es eine Weißlichtquelle (8) aufweist, die ein Lichtsignal erzeugt, das moduliert wird, indem es Farbfilter durchquert, die mechanisch mit einem beweglichen Teil (7) des Einstellmittels (5) fest verbunden sind, und das derart modulierte Signal zu dem Ausstrahlungsmittel (6) übertragen wird.

3. Gerät (1) nach Anspruch 1 oder 2, **dadurch gekennzeichnet, dass** das erzeugte elektrische Signal das Mittel (6) zur Ausstrahlung des Lichtsignals speist.

4. Gerät (1) nach Anspruch 1, **dadurch gekennzeichnet, dass** es eine Lichtquelle aufweist, die das zu dem Ausstrahlungsmittel (6) übertragene Lichtsignal liefert, wobei die Lichtquelle durch ein zweites elektrisches Signal gespeist wird, dessen eine Charakteristik in Abhängigkeit von dem Einstellmittel variiert.

5. Gerät (1) nach einem der Ansprüche 1, 2 oder 4, **dadurch gekennzeichnet, dass** es ein Mittel zur Detektion eines Fehlers bei der Erzeugung des elektrischen Signals aufweist, wobei das Mittel bei Detektion eines solchen Fehlers sichtbar auf die Ausstrahlung des Lichtsignals sichtbar einwirkt.

6. Gerät (1) nach einem der vorhergehenden Ansprüche, **dadurch gekennzeichnet, dass** das Mittel (6) zur Ausstrahlung des Lichtsignals auf dem Verbindungselement (3) derart angeordnet ist, dass es sichtbar bleibt, wenn das Verbindungselement mit dem Gerät verbunden ist, um diesem das elektrische Signal zu liefern.

7. Gerät (1) nach einem der vorhergehenden Ansprüche, **dadurch gekennzeichnet, dass** das Verbindungselement (3) lösbar ist, wobei das Gerät über einen Satz von mehreren unterschiedlichen Verbindungselementen (3) verfügt.

8. System bestehend aus einem Gerät (1) zum Erzeugen eines elektrischen Signals, welches über ein Mittel zur Erzeugung des elektrischen Signals, ein Mittel (5) für die Einstellung einer Charakteristik des Signals und ein das Signal zu einem ersten Verbindungselement (3) übertragendes Kabel (2) verfügt, und aus einem anderen Gerät (20), welches ein anderes Verbindungselement aufweist, das geeignet ist, mit dem ersten Verbindungselement (3) verbunden zu werden, **dadurch gekennzeichnet, dass** dieses zweite Gerät eine Sichtanzeige aufweist, die vorzugsweise nahe dem anderen Verbindungselement angeordnet ist und über den für einen Normalbetrieb des zweiten Geräts zu erzeugenden Signaltyp informiert, wobei das Kabel (2) ein Lichtsignal überträgt, dessen eine sichtbare Charakteristik von dem Wert der einstellbaren Charakteristik des erzeugten elektrischen Signals abhängt, wobei das erste Verbindungselement (3) ein Mittel (6) zur Ausstrahlung des Lichtsignals aufweist.

9. System bestehend aus einem Gerät (1) zum Erzeugen eines elektrischen Signals und einem anderen Gerät (20) für den Empfang des elektrischen Signals nach Anspruch 8, **dadurch gekennzeichnet, dass** die Sichtanzeige an dem anderen Gerät (20) durch einen Ring gebildet ist, der den Verbinder umschließt, in den das Verbindungselement (3) gesteckt wird.
